# EUROPEAN PATENT APPLICATION

(11) **EP 1 878 905 A2**
(43) Date of publication of application: **16.01.2008**
(21) Application number: 06398013.0
(22) Date of filing: 12.09.2006
(51) Int. Cl.: F02M 31/16

(54) **Fuel consumption reducer, heated by heat chamber in the turbo collector**

(30) Priority: 12.07.2006 PT 10346806
(71) Applicant: Antunes Medeiros, Mário Gaspar, 2900 Setubal (PT)
(72) Inventor: Antunes Medeiros, Mário Gaspar, 2900 Setubal (PT)

(57) **Abstract**

"Fuel consumption reducer, heated by heat chamber in the turbo collector"

The present patent refers to a heat chamber, attached directly to the hot side of the collector of diesel powered vehicles.

The heat chamber is a single metal piece, attached directly to the exterior of the hot side of the turbo collector, with the purpose of gathering all of the heat issued by the referred turbo collector. Points (3) and (4) of figure 1 exemplify the location of the attachment points, by clamp with screw and nut. The present method guarantees stability of the heat chamber as attached to the turbo collector.

The diesel at environment temperature enters the heat chamber by a single entrance (1), which, after the heat circuit, will be injected by the injection pump, by a single exit (2) to the fuel filter and subsequently to the injectors, where the pulverisation to the combustion chamber takes place, where the combustion takes place allowing the productivity of the fuel.

## Description

The present patent refers to a heat chamber, fixed to the hot side of the turbo collector, of diesel powered vehicles.

The heat chamber consists of a piece of metal, fixed directly to the exterior of the hot side of the turbo collector, for the purpose of gathering all of the heat issued by the referred.

The mentioned heat chamber consists of one piece adjusted to the model of each turbo collectors hot side, its interior consists of a chamber, where the vehicles fuel passes.

The heat chamber has one entrance for fuel coming directly from the fuel tank at environment temperature, and one exit, after the heating circuit.

Following the heating circuit, the heated fuel is injected by the injection pump to the diesel filter and subsequently to the injectors.

The present patent will now be explained in more detail with the assistance of the attached drawings, in which:
Figure 1, is a view from above of the turbo collector set;
Figure 2, lateral view of the turbo collector set;
Figure 3, frontal view of the turbo collector set.

Making reference to the drawings of the figures, 1; 2 e3; represent generically the mode of application of the heat chamber, in articulation with the hot side of the turbo collector.

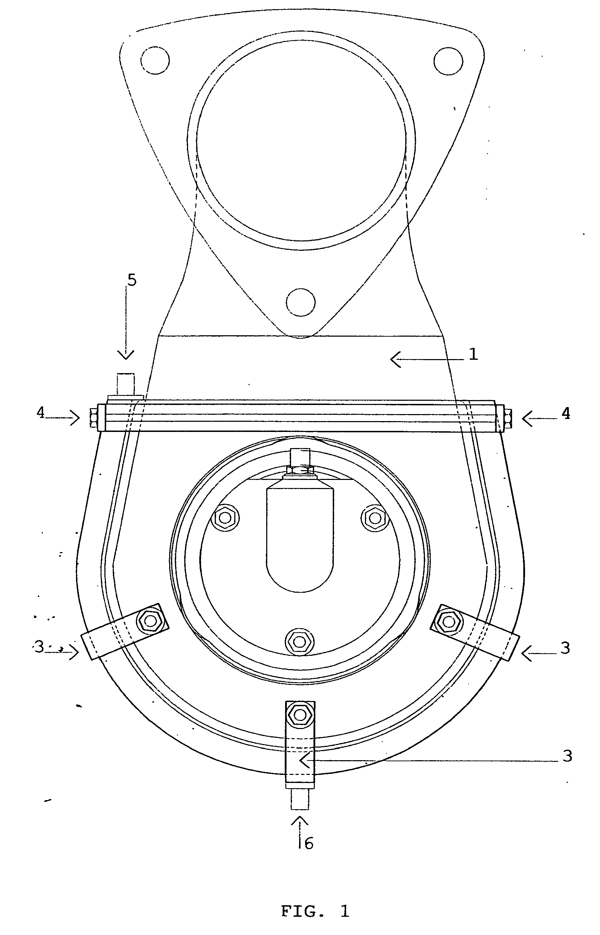

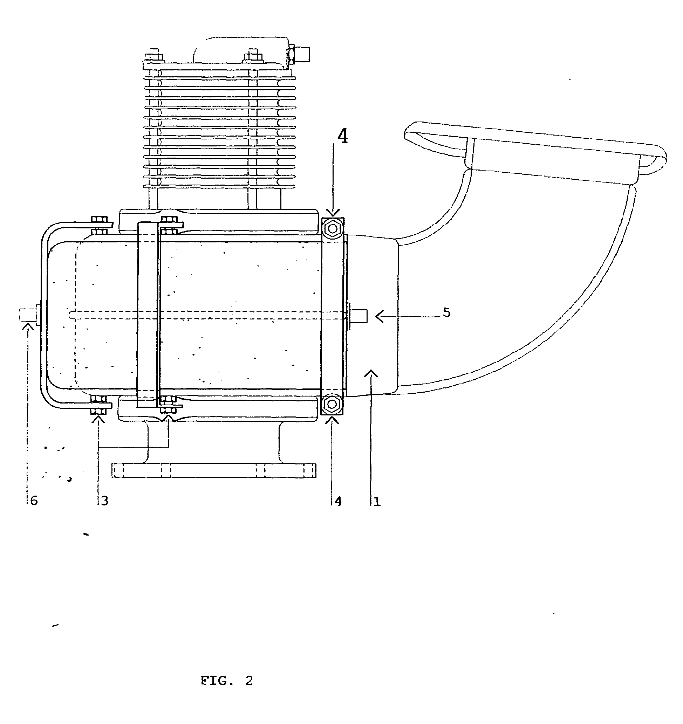

For a better understanding of the geometry of the heat chamber, we have as example figures 1 and 2. We understand that the referred heat chamber consists of a single piece that goes around the hot side of the turbo collector, such that it makes maximum use of the heat sources issued by the referred hot side of the turbo collector.

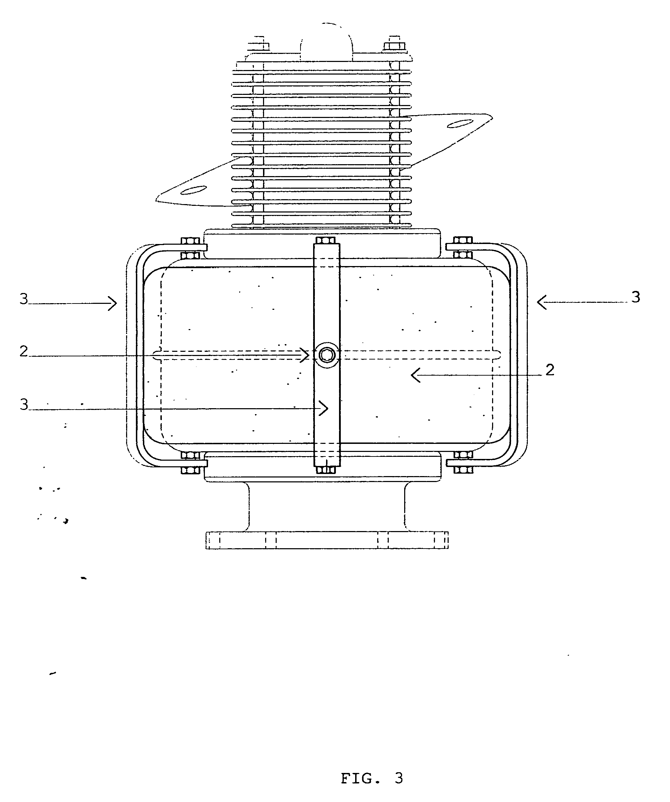

For the purpose of guaranteeing attachment stability of the said heat chamber, this is secured at five fundamental points, as per figures 1, 2 and 3 points 3 and 4.
It is understood that the attaching is done by use of two clamps that go around the extreme of the turbo collector.

Points (3) of figure 1, 2 and 3 exemplify the location of the attachment points, by clamp with screw and nut. The present method guarantees stability of the heat chamber as attached to the turbo collector.

The said heat chamber contains, one single fuel entrance at environment temperature, (1) that after the heat circuit will be injected to the injection pump, by one single exit (2), to the diesel filter and subsequently to the injectors. Where the pulverization to the combustion chamber takes place.

It will be in the combustion chamber that the diesel coming hotter will make the compression less, such that the productivity is recognised as well as the reduction in fuel consumption.

## Claims

1. - Fuel consumption reducer, heated by heat chamber, attached directly to the hot side of the turbo collector, allowing in this way to make use of the heat emitted by the turbo collector, **characterised by** a single piece attached by clamps with screw and nut (3), (4) guaranteeing stability and the perfect contact with the hot side of the turbo collector, source of heat emission.

2. - In accordance with claim 1, **characterised by** the reduction of fuel consumption, heated by the heat chamber, attached directly to the hot side of the turbo collector, the heat circuit of the fuel, comes directly from the fuel tank till the entrance of the referred heat chamber (1) at environment temperature, after the heat circuit, making the referred fuel pass through the interior of the heat chamber and injected to the fuel filter, by the injection pump by a single exit of the heat chamber (2). After which the injectors pulverise to the combustion chamber, where the combustion takes place and allows the productivity of the fuel.
